# EUROPEAN PATENT APPLICATION

(11) **EP 2 960 736 A2**
(43) Date of publication of application: **30.12.2015**
(21) Application number: 15169550.9
(22) Date of filing: 28.05.2015
(51) Int. Cl.: G05B 19/402

(54) **COMPONENT PROCESSING**

(30) Priority: 25.06.2014 GB 201411232
(71) Applicant: Rolls-Royce plc, London SW1E 6AT (GB)
(72) Inventor: Andreou, Richard, Derby, Derbyshire DE24 8BJ (GB)
(74) Representative: Rolls-Royce plc

(57) **Abstract**

The present invention provides an apparatus for processing a component (41), e.g. a fan blade for a gas turbine engine. The apparatus comprises a support frame (26) with a rotatably mounted first support (27) for supporting the component (41) and a robotic arm (32) with a rotatably mounted mounting portion (33) for supporting a processing tool. The support frame (26) includes at least one frame locator (30) provided in a fixed spatial relationship with the support frame (26). The first support (27) includes at least one first support locator (29) and the apparatus further includes at least one mounting portion locator provided in a fixed spatial relationship with the mounting portion (33). A detector (34) is provided for detecting the position of the at least one frame locator (30), the at least one first support locator (29) and the at least one mounting portion locator such that, in use, the detector (34) determines the relative positions and the orientations of the support frame (26), the first support (27) and the mounting portion (33).

## Description

### Field of the Invention

The present invention relates to an apparatus and method for processing a component, e.g. for processing a fan blade of a gas turbine engine.

### Background of the Invention

It is known to process components e.g. metal components such as fan blades for gas turbine engines, to remove surface projections from the exterior profile and/or to polish/linish the surface to create the desired surface finish.

Surface projections are typically removed manually whilst polishing/linishing is typically an automated process where a robotic arm moves a linishing belt over the surface of the component using a standard toolpath which may be manually- or computer-generated. For smaller components such as turbine blades, it is known to support the component at the end of the robotic arm and move the component, again using a standard, computer-generated toolpath, against a static polishing/linishing belt. Polishing/linishing of metal components is ideally carried out in a wet environment using a coolant to avoid thermal damage to the component/tool.

One problem with using a robotic arm and a standard toolpath for polishing/linishing a component is that no account is taken of any inaccuracy or drift in the position of the robotic arm relative to the component.

In an attempt to address this problem, it is known to mount a contact measurement probe on a robotic arm and use the probe to establish the relative position of the static component and the robotic arm. One problem with this approach is that it is difficult to calibrate and/or maintain the accuracy of such probes leading to inaccuracies in the process.

Some components e.g. fan blades for gas turbine engines, are hollow components and therefore the exterior surface needs to be processed to obtain both the desired surface finish and the desired wall thickness in the vicinity of the internal cavity. It is known to use ultrasound to measure cavity dimensions. Ultrasonic probes typically use a couplant such as water which must be circulated separately from any coolant and which, in some cases (e.g. when the couplant is a gel couplant) must be subsequently thoroughly removed from the component.

Another attempt to improve an automated polishing/linishing process is described in GB 2498333 which describes mounting a turbine blade on a robotic arm provided with a measurement fixture having a series of circumferentially spaced posts, each post bearing a number of LEDs. The position of the measurement fixture, and thus the position of the turbine blade, relative to a fixed linishing machine is continuously monitored by a camera and associated image processing system determining which LEDs are visible at any time. This provides a continuous or static feedback to a computer controlling the robotic arm to adjust the position of the robotic arm in the event that the position of the measurement fixture was deemed to be incorrect. This process is not suitable if the component is large (e.g. a fan blade for a gas turbine engine). Furthermore, the apparatus and process described in GB2498333 only monitors and corrects for the position of the moving component. It does not correct for positional or orientational inaccuracy in the position of the static tool/machine.

There is a need for an automated process for processing e.g. polishing/linishing a component e.g. a fan blade for a gas turbine engine, which can be carried out in a wet environment and which allows continuous monitoring of the relative positions and orientations of two parts e.g. a component and a tool so that corrections for positional or orientational inaccuracies in the positions of both parts can be applied.

### Summary of the Invention

In a first aspect, the present invention provides an apparatus for processing a component, the apparatus comprising:
a support frame with a rotatably mounted first support for supporting a first part;
a robotic arm with a rotatably mounted mounting portion for supporting a second part;
at least one frame locator provided in a fixed spatial relationship with the support frame;
at least one first support locator provided on the first support;
at least one mounting portion locator provided in a fixed spatial relationship with the mounting portion; and
a detector for detecting the position of the at least one frame locator, the at least one first support locator and the at least one mounting portion locator such that, in use, the detector determines the relative positions and the orientations of the support frame, the first support and the mounting portion,
wherein one of the first part and the second part is the component and the other is at least one processing tool.

Before first use, a calibration step is carried out in which the detector detects the position of the at least one frame locator, the at least one support locator and the at least one mounting portion locator to establish the relative spatial positions and orientations of the support frame, first support and the robotic arm. In subsequent use, the first support on the support frame holds the first part whilst the mounting portion of the robotic arm holds the second part. The first support locator is on the first support and thus will rotate with the first support (and the first part) as it rotates on the support frame. The mounting portion locator is in a fixed spatial relationship with the mounting portion and thus will rotate with the mounting portion (and the second part) as it rotates on the robotic arm. The presence of the frame, first support and mounting portion locators allows the detector to detect (both prior to processing (during the calibration step) and during processing) the relative spatial positions and the orientations of the first part supported by the first support and the second part supported on the mounting portion. This allows corrections to be made to the position and orientation of the second part (mounted on the robotic arm) during processing to take account of any inaccuracy in the position/orientation of either/both part(s).

Optional features of the invention will now be set out. These are applicable singly or in any combination with any aspect of the invention.

In some embodiments, the first support comprises a plurality of first support locators. The plurality of first support locators may be circumferentially, axially and/or radially spaced from one another, e.g. equally spaced about the rotational axis of the first support. Each of the plurality of first support locators may have a unique identifier e.g. a unique reference number.

In some embodiments, the first support comprises a plate with a peripheral edge and the or each first support locator is provided on the peripheral edge. In some embodiments, the plate is a circular plate (disc) having a radially outer peripheral edge and the or each first support locator is provided on the radially outer peripheral edge, e.g. equally spaced about the circumference of the radially outer peripheral edge.

The or each first support locator may be an optically detectable locator e.g. an LED such as an infra-red LED.

In some embodiments, the first support may be provided with a measurement fixture having a plurality of LEDs as described in GB 2498333.

Where there is a plurality optically detectable first support locators (e.g. LEDs), the unique identifier for each first support locator may be a unique strobing pattern which is detectable (by the detector) as described in GB2498333.

In some embodiments, the or each first support locator is a projection e.g. a sphere or cone, or an indentation. The or each projecting/indented first support locator is used to position a probe, e.g. a hand-held probe, having at least one and preferably a plurality of optically detectable probe locators e.g. LEDs such as infra-red LEDs. Such a hand-held probe forms part of Nikon's proprietary metrology system. The probe locator(s) is/are detected by the detector in a calibration step in order to detect the position of the first support locator(s) and thus the orientation of the first support.

Where there is a plurality of projecting/indented first support locators, the unique identifier for each first support locator may be a unique reference number or sign.

In some embodiments, the at least one frame locator is mounted on the support frame. The or each frame locator may be an optically detectable locator e.g. an LED such as an infra-red LED.

Preferably, there is a plurality of frame locators and most preferably at least three frame locators, e.g. six frame locators. Each of the plurality of frame locators may have a unique identifier e.g. a unique reference number.

Where there is a plurality optically frame locators (e.g. LEDs), the unique identifier for each frame locator may be a unique strobing pattern which is detectable (by the detector) as described in GB2498333.

In some embodiments, the or each first support locator is a projection/indentation on the first support and the or each frame locator is an optically detectable locator (e.g. LED) mounted on the support frame.

In some embodiments, the support frame further comprises a rotatably mounted second support mounted on a common rotational axis between the first and second supports. The second support may comprise at least one or a plurality of second support locators as described above for the first support locators or it may be a simple plate/disc without any locators.

Where there is a plurality of frame locators, at least one may be proximal the first support and at least one may be proximal the second support. In other embodiments, the at least one frame locator may be located on the support frame between the first and second supports.

In some embodiments, the first and/or second support comprises a cover for covering the at least one first and/or second support locator(s) to protect them during processing.

In some embodiments, the apparatus comprises a plurality of mounting portion locators. The plurality of mounting portion locators may be circumferentially and/or axially and/or radially spaced from one another, e.g. equally spaced about the rotational axis of the mounting portion. Each of the mounting portion locators may have a unique identifier.

The or each mounting portion locator may be an optically detectable locator e.g. an LED such as an infra-red LED.

Where there is a plurality optically detectable mounting portion locators, the unique identifier for each mounting portion locator may be a unique strobing pattern which is detectable (by the detector) as described in GB2498333.

The at least one or plurality of mounting portion locator(s) may be provided on the mounting portion of the robotic arm.

In some embodiments, the mounting portion may be provided with a measurement fixture having a plurality of LEDs as described in GB 2498333.

In some embodiments, the first part (supported by the first support) is the component and the second part (supported by the mounting portion) is the processing tool.

In these embodiments, the apparatus comprises at least one processing tool for mounting on the mounting portion of the robotic arm and the mounting portion locator(s) may be provided on the at least one processing tool. The plurality of mounting portion locators may be circumferentially, radially and/or axially spaced from each other, e.g. equally spaced on the processing tool around the rotational axis of the mounting portion on the robotic arm.

One processing tool may be a scanning head for scanning e.g. laser scanning an exterior profile of the component and/or the first support locators during a processing step.

In some embodiments, the apparatus further comprises a computer system comprising an image processing system e.g. a CAD/CAM system for viewing a 3D profile of the component obtained by the scanning head. In some embodiments, the computer system may be adapted to generate a toolpath or to adjust a standard toolpath by comparing the 3D profile of the component with a desired profile of the component.

One processing tool may be an ultrasound probe for measuring wall thickness of a hollow component in the vicinity of an internal cavity in the component. The ultrasound probe may comprise a non-contact squirter system where coolant (e.g. water) is fed (e.g. from a tank) to a nozzle on the ultrasound probe.

One processing tool may comprise a tool comprising an abrasive belt to abrade the component into the required shape e.g. by removing surface projections and/or adjusting wall thickness in the vicinity of an internal cavity in a hollow component.

One processing tool may comprise a tool comprising a polishing belt for polishing/linishing the exterior surface of the component to create a desirable surface finish.

One processing tool may comprise a tool for cleaning and/or drying the exterior surface of the component.

In some embodiments, the detector is a camera. The camera may form part of Nikon's proprietary metrology system which allows multiple frame tracking and visibility to a precision of up to 100 µm. The detector may include a cover e.g. a retractable or openable cover to protect the detector during processing.

In a second aspect, the present invention provides a processing cell comprising an apparatus according to the first aspect of the present invention. The apparatus of the first aspect allows complete automated processing of a component within a single processing cell.

In a third aspect, the present invention provides a method of processing a component, said method comprising:
providing an apparatus according to the first aspect,
providing a scanning head as a first processing tool;
mounting the first part on the first support;
mounting the second part on the mounting portion of the robotic arm;
using the detector or the scanning head to detect the position of the at least one support and thus the first part by detecting/scanning the at least one support locator; and
scanning the component using the scanning head whilst using the detector to detect the position and orientation of the mounting portion and thus the second part by detecting the position of the at least one mounting portion locator.

Detecting the first support locator(s) and mounting portion locator(s) allows for correction to the position and orientation of the second (moving) part during processing (scanning) to take account of any inaccuracy in the position/orientation of either/both part(s).

In some embodiments, the scanning head is a laser scanning head and the method comprises laser scanning the component (e.g. the exterior profile of the component) and optionally the at least one support locator.

Where the at least one support locator is a projection/indentation, the method comprises using the scanning head to detect the at least one first support locator.

Where the at least one support locator is an optically detectable locator, the method comprises using the detector to detect the at least one first support locator.

The method may be preceded by a calibration step comprising using the detector to detect the position of the at least one frame locator and the at least one mounting portion locator to establish the relative positions of the support frame and the robotic arm.

The method may also include a second calibration step comprising using the detector to detect the position and orientation of the first support by detecting the position of the at least one first support locator. This second calibration step need only be carried out before first use.

In some embodiments, the first part (supported on the first support) is the component and the second part (mounted on the mounting portion) is the processing tool (scanning head).

In some embodiments, the method comprises mounting the component on the support frame using the first support (and optionally the second support).

In these embodiments, the method further comprises mounting the scanning head on the mounting portion of the robotic arm.

In some embodiments, the method further comprises using a computer system comprising an image processing system (e.g. CAD/CAM system) to generate a 3D profile of the component using the data obtained by the scanning head. In some embodiments, the method further comprises comparing the 3D profile with a desired component profile and generating a toolpath based on the comparison. The toolpath may be, for example, an ultrasound toolpath, an abrading toolpath or a polishing toolpath.

In some embodiments, the method further comprises replacing the scanning head with a further processing tool and processing the component whilst using the detector to detect the position and orientation of the mounting portion and thus the second part by detecting the position of the at least one mounting portion locator.

The further processing tool may be an ultrasound probe, a tool comprising an abrasive belt, a tool comprising a polishing belt or a tool to facilitate cleaning and/or drying. This may be done automatically without user intervention. In some embodiments, a number of processing tools are mounted (one at a time) e.g. automatically mounted, on the mounting portion of the robotic arm.

In some embodiments, where the component is a hollow component, the method comprises using an ultrasound probe (e.g. as the second part mounted on the mounting portion of the robotic arm) for measuring wall thickness of a hollow component. The method then comprises measuring wall thickness in the vicinity of the internal cavity whilst detecting the positions/orientations of the at least one mounting portion locator (provided on the mounting portion or on the ultrasound probe) to establish (and adjust if necessary) the position/orientation of the ultrasound probe relative to the component.

The method may comprise using the ultrasound toolpath generated by the computer system using the scanning data to position the ultrasound probe in the vicinity of the cavity prior to or during measuring the wall thickness.

The method may comprise incrementally adjusting the angle of the ultrasound probe relative to the component until a strong signal (preferably greater than 99% from the front wall of the cavity and 60% from back wall of the cavity) is achieved. The angle may be adjusted sequentially in two perpendicular planes.

In some embodiments, the method comprises using a processing tool comprising an abrasive belt (e.g. as the second part mounted on the mounting portion of the robotic arm) to abrade the component into the required shape e.g. by removing surface projections and/or adjusting wall thickness in the vicinity of internal cavities. The method then comprises abrading the component whilst detecting the positions/orientations of the at least one mounting portion locator (provided on the mounting portion or on the abrasive belt tool) to establish (and adjust if necessary) the position/orientation of the abrasive belt tool relative to the component.

The method may comprise using the abrading tool path generated by the computer system using the scanning data to position the abrasive belt tool relative to the component.

The method may comprise washing/drying the component after processing with the abrasive belt tool.

The method may comprise re-scanning the component by re-mounting the scanning head and scanning (e.g. laser scanning) the abraded exterior profile of the component whilst detecting the positions/orientations of the at least one mounting portion locator (provided on the mounting portion or on the scanning head) to establish the position/orientation of the scanning head relative to the component.

The data generated by re-scanning may be transmitted to the computer system (e.g. CAD/CAM system) to generate a second 3D profile of the component. In some embodiments, the method further comprises comparing the 3D profile with a desired component profile and generating a further tool path (e.g. a re-abrading toolpath or a polishing toolpath) based on the comparison.

The re-abrading toolpath may be used to re-process the component using the abrasive belt tool if the 3D profile generated after abrading the component is not sufficiently matched to the desired 3D profile.

In some embodiments, the method comprises comprises using a processing tool comprising a polishing belt (e.g. as the second part mounted on the mounting portion of the robotic arm) to polish/linish the surface of the component. The method then comprises polishing/linishing the component whilst detecting the positions/orientations of the at least one mounting portion locator (provided on the mounting portion or on the polishing belt tool) to establish (and adjust if necessary) the position/orientation of the polishing belt tool relative to the component.

The method may comprise using the polishing toolpath generated by the computer system using the re-scanning data to move the robotic arm with the mounted polishing belt tool relative to the component.

In a fourth aspect, the present invention provides a component processed using an apparatus according to the first aspect and a method according to the third aspect. In some embodiments, the component is a fan blade for a gas turbine engine.

### Brief Description of the Drawings

Embodiments of the invention will now be described by way of example with reference to the accompanying drawings in which:
Figure 1 shows a ducted fan gas turbine engine;
Figure 2 shows an embodiment of the apparatus according to the first aspect of the present invention; and
Figure 3 shows a schematic outlining the steps in an embodiment of the method according to the third aspect.

### Detailed Description and Further Optional Features of the Invention

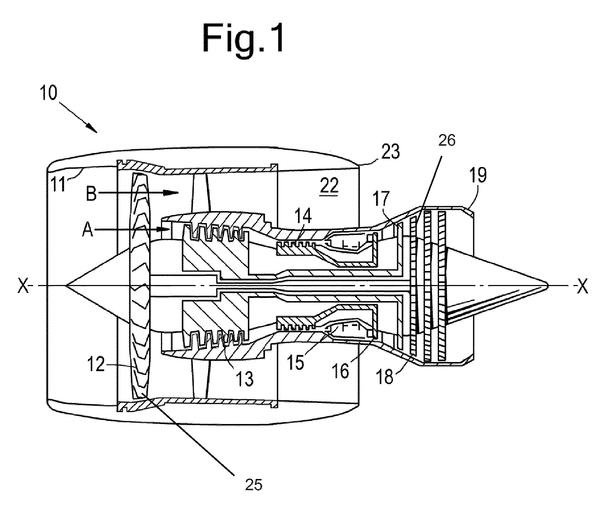

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The propulsive fan 12 comprises a plurality of blades 25 formed by processing a metal component 41 using an embodiment of the present invention as described below.

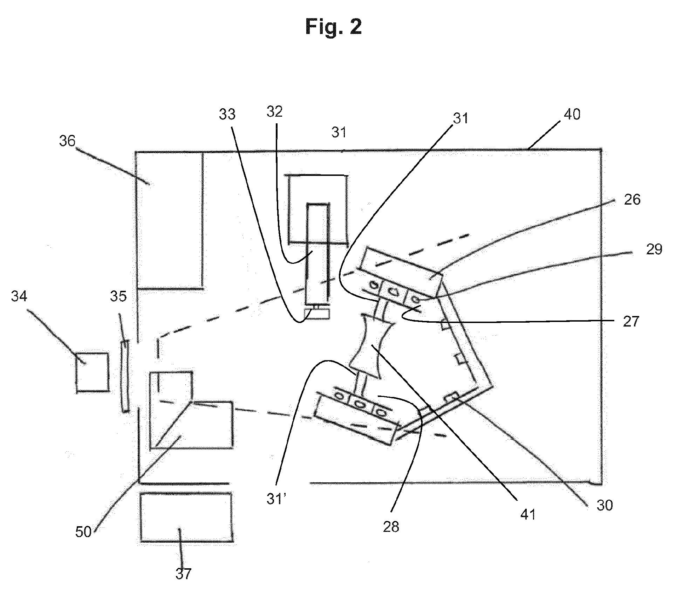

A first embodiment of the apparatus according to the first aspect is shown in Figure 2.

The apparatus is provided within a single working cell 40 and comprises a support frame 26 with a first support 27 and a second support 28 both rotatably mounted and axially aligned on the support frame 26.

Each of the first and second supports 27, 28 is a circular plate (disc) with a radially outer peripheral edge. The radially outer peripheral edge of the first support comprises a plurality of first support locators in the form of spherical projections 29 equally spaced around the rotational axis of the first support on the circumference of the radially outer peripheral edge. The radially outer peripheral edge of the second support comprises a plurality of second support locators in the form of spherical projections 29' equally spaced around the rotational axis of the second support (which is common with the rotational axis of the first support) on circumference of the radially outer peripheral edge.

The first and second supports each comprise a cover (not shown) for covering the spherical projections 29, 29' to protect them during processing.

The apparatus further comprises a plurality of frame locators 30 in a fixed spatial relationship with (mounted on) the support frame 26. The frame locators 30 are optically detectable locators i.e. infra-red LEDs. The frame locators 30 may be positioned between the first and second supports (as shown) or they may be positioned on the support frame 26 proximal the first and second supports 27, 28.

The first and second supports each comprise a clamp 31, 31' for clamping and supporting the component 41. The clamp may be replaced with an alternative fixing device.

The apparatus further comprises a robotic arm 32 with a rotatably mounted mounting portion 33 for supporting a processing tool.

The apparatus further comprises a detector 34 which is a Nikon camera. The detector 34 is provided with a retractable cover 35 for protecting the camera when not in use.

The apparatus comprises a plurality of processing tools for mounting (one at a time) on the mounting portion 33 of the robotic arm 32. Each processing tool comprises a plurality of mounting portion locators (not shown) which are affixed to the processing tool such that, when the processing tool is mounted on the mounting portion, the plurality of mounting portion locators are equally spaced about the rotational axis of the mounting portion on the robotic arm.

The mounting portion locators are optically detectable locators i.e. infra-red LEDs.

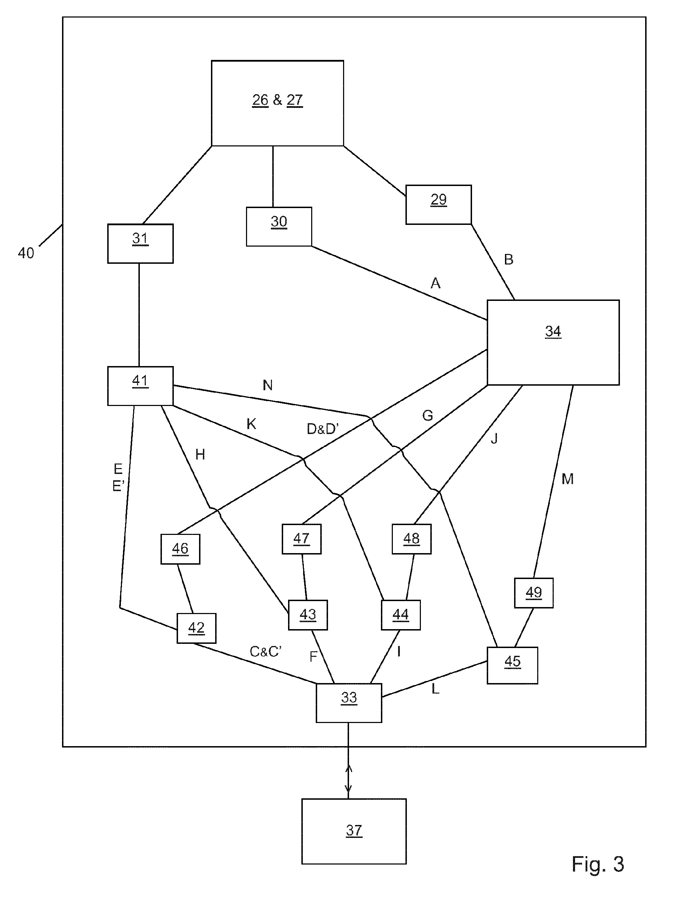

One processing tool is a scanning head 42 (in Figure 3) for laser scanning an exterior profile of the component. One processing tool is an ultrasound probe 43 for measuring wall thickness of a hollow component. One processing tool is a tool comprising an abrasive belt 44 to abrade the component into the required shape e.g. by removing surface projections and/or adjusting wall thickness in the vicinity of internal cavities. One processing tool is a tool comprising a polishing belt 45 for polishing/linishing the exterior surface of the component to create a desirable surface finish. Further processing tools may facilitate cleaning and drying of the component.

The scanning head 42 and ultrasound probe 43 are stored within the working cell in a protective housing 50. The abrasive belt tool 44 and the polishing belt tool 45 are stored within the cell in a tool rack 36.

The robotic arm 32 is movable to automatically mount one of the processing tools on the mounting portion and, subsequently un-mount the processing tool to replace it with an alternative processing tool.

The apparatus further comprises a computer system comprising an image processing system i.e. a CAD/CAM system 37 which is located outside the working cell.

In order to process the component, 41, clamped between the first support 27 and the second support 28, the following steps are carried out. Most of these steps are carried out automatically without any user input and without any manual manipulation of the component. It will be apparent to the person skilled in the art that the order of some of the steps may be varied.

The camera 34 initially detects the positions of the LED frame locators 30 within the cell 40 (step A in Figure 3) in order to establish to position of the frame 26, the first and second supports 27, 28 and thus the position of the component within the cell. A calibration step for the robotic arm 32 is carried out by mounting a measurement fixture having a plurality of LEDs as described in GB 2498333 on the mounting portion and moving the robotic arm to a plurality of (e.g. ten) different spatial positions. At each spatial position, the camera detects the position of the LEDs on the measurement fixture and the position of the LED frame locators and this data is supplied to and digitally processed by the CAD/CAM system 37 to establish the spatial relationship between the robotic arm 33 and the frame 26.

Next the orientation of the component is determined (step B in Figure 3). A hand-held probe (not shown) having a plurality LEDs (part of Nikon's proprietary metrology system) is positioned at one of the spherical projections 29 and the camera detects the position of the LEDs and thus detects the position of the selected spherical projection. This is repeated for the remaining spherical projections 29 to establish the position and orientation of the first support and thus the position and orientation of the component.

Next, the robotic arm 32 moves to automatically mount the laser scanning head 42 on the mounting portion 33 (step C in Figure 3). The laser scanning head 42 has a plurality of LEDs 46 mounted such that they are equally spaced about the rotational axis of the mounting portion 33 on the robotic arm 32.

The camera detects the position and orientation of the scanning head 42 by viewing the LEDs 46 (step D in Figure 3).

Next the robotic arm 32 is moved using a standard toolpath over the surface of the component 41 to scan the exterior profile of the component 41 (step E in Figure 3). The scanning head 42 scans the spheres 29, 29' to detect the orientation of the component and thus determine the portion of the exterior profile which has been scanned. After scanning one portion, the component 41 is rotated about the rotational axis of the first and second supports 27, 28 to present another portion of the component 41 to the scanning head 42.

Once the entire component 41 has been scanned, the CAD/CAM system 37 uses the scanning data to generate a 3D profile of the component. The CAD/CAM system 37 compares the 3D profile of the component with the desired profile and (if ultrasound is to be used) generates an ultrasound toolpath based on the comparison.

If the component 41, is a hollow component, the method then comprises (automatically) replacing the scanning head 42 with an ultrasound probe 43 on the mounting portion 33 (step F in Figure 3). The ultrasound probe 43 has a plurality of LEDs 47 mounted such that they are equally spaced about the rotational axis of the mounting portion 33 on the robotic arm 32.

The camera 34 detects the position and orientation of the ultrasound probe 43 by viewing the LEDs 47 (step G in Figure 3).

The ultrasound probe 43 uses the ultrasound toolpath generated by the CAD/CAM system 37 to move to the vicinity of the cavity within the component 41. The ultrasound probe 43 then measures the thickness of the component wall defining the cavity (step H in Figure 3) whilst the camera 34 detects the positions/orientations of the LEDs 47 on the ultrasound probe 43 (step G in Figure 3) to establish and adjust (if necessary) the position/orientation of the ultrasound probe 43 relative to the first support (and thus the component).

The angle of the ultrasound probe 43 relative to the component 41 is incrementally adjusted first in one plane and then in a second, perpendicular plane until a strong signal (preferably greater than 99% from the front wall of the cavity and 60% from back wall of the cavity) is achieved.

The data from the ultrasound probe 43 is passed to the CAD/CAM system 37 and this data, combined with the data from the scanning head 42 is used to generate an abrading toolpath.

The method then comprises (automatically) replacing the ultrasound head 43 with a tool comprising an abrasive belt 44 on the mounting portion 33 (step I in Figure 3). The abrasive belt tool 44 has a plurality of LEDs 48 mounted such that they are equally spaced about the rotational axis of the mounting portion 33 on the robotic arm 32. The LEDs 48 may be provided on a measurement fixture as described in GB 2498333.

The camera 34 detects the position and orientation of the abrasive belt tool 44 by viewing the LEDs 48 (step J in Figure 3).

The abrasive belt tool 44 uses the abrading toolpath generated by the CAD/CAM system 37 to process (abrade) the component 41 into the required shape (e.g. by removing surface projections and/or adjusting wall thickness in the vicinity of an internal cavity) (step K in Figure 3) whilst the camera 34 detects the positions/orientations of the LEDs 48 on the abrasive belt tool 44 to establish (step J in Figure 3) and adjust (if necessary) the position/orientation of the abrasive belt tool 44 relative to the first support 27 (and thus the component).

The method then comprises washing/drying the component 41 to remove abraded material.

Next, the robotic arm 32 moves to automatically re-mount the laser scanning head 42 on the mounting portion (step C' in Figure 3). The camera detects the position and orientation of the scanning head 42 by viewing the LEDs 46 on the scanning head 42 as before (step D' in Figure 3).

The robotic arm 32 is moved using a standard toolpath over the surface of the component 41 to re-scan the exterior profile of the component 41 (step E' in Figure 3). Again, the scanning head 42 scans the spheres 29, 29' to detect the orientation of the component and thus determine the portion of the exterior profile which has been scanned. After scanning one portion, the component 41 is rotated about the rotational axis of the first and second supports 27, 28 to present another portion of the component 41 to the scanning head 42.

Once the entire component 41 has been scanned, the CAD/CAM system 37 uses the re-scanning data to generate a further 3D profile of the component. The CAD/CAM system 37 compares the further 3D profile of the component with the desired profile.

If the further 3D profile is sufficiently matched to the desired profile, the next step is polishing/linishing as described below. Alternatively, if the further 3D profile is still not sufficiently matched, a second abrading toolpath is generated and used to move the robotic arm with the mounted abrasive belt tool 44 to re-abrade the component 41.

When the 3D profile is sufficiently matched to the desired profile, the CAD/CAM system 37 generates a polishing toolpath and the polishing belt tool 45 is automatically mounted on the mounting portion 33 of the robotic arm 32 (step L in Figure 3). The polishing belt tool 45 has a plurality of LEDs 49 mounted such that they are equally spaced about the rotational axis of the mounting portion 33 on the robotic arm 32.

The camera 34 detects the position and orientation of the polishing belt tool 45 by viewing the LEDs 49 (step M in Figure 3).

The polishing belt tool 45 uses the polishing toolpath generated by the CAD/CAM system 37 to process (polish) the component 41 (step N in Figure 3) whilst the camera 34 detects the positions/orientations of the LEDs 49 on the polishing belt tool 45 (step M in Figure 3) to establish and adjust (if necessary) the position/orientation of the polishing belt tool 45 relative to the first support 27 (and thus the component).

The method then comprises washing/drying the component 41 to remove any debris from the processed component.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

All references referred to above are hereby incorporated by reference.

## Claims

1. An apparatus for processing a component, the apparatus comprising:
a support frame (26) with a rotatably mounted first support (27) for supporting a first part;
a robotic arm with a rotatably mounted mounting portion (33) for supporting a second part;
at least one frame locator (30) provided in a fixed spatial relationship with the support frame;
at least one first support locator (29) provided on the first support;
at least one mounting portion locator provided in a fixed spatial relationship with the mounting portion; and
a detector (34) for detecting the position of the at least one frame locator, the at least one first support locator and the at least one mounting portion locator such that, in use, the detector determines the relative positions and the orientations of the support frame, the first support and the mounting portion,
wherein one of the first part and the second part is the component (41) and the other is at least one processing tool.

2. An apparatus according to claim 1 where the first support comprises a plurality of first support locators equally spaced about the rotational axis of the first support.

3. An apparatus according to claim 1 or 2 wherein the or each first support locator is an optically detectable locator.

4. An apparatus according to claim 1 or 2 wherein the or each first support locator is a projection or indentation.

5. An apparatus according to any one of the preceding claims wherein the or each frame locator is an optically detectable locator.

6. An apparatus according to any one of the preceding claims wherein the or each mounting portion locator is an optically detectable locator.

7. An apparatus according to any one of the preceding claims further comprising at least one processing tool for mounting on the mounting portion of the robotic arm.

8. An apparatus according to any one of the preceding claims wherein the or each mounting portion locator is affixed to the mounting portion of the robotic arm.

9. An apparatus according to any one of claims 1 to 7 wherein the or each mounting portion locator is affixed to the at least one processing tool.

10. A method of processing a component, said method comprising:
providing an apparatus according to any one of claims 1 to 9,
providing a scanning head (42) as a first processing tool;
mounting the first part on the first support (27);
mounting the second part on the mounting portion (33) of the robotic arm;
using the detector (34) or the scanning head (42) to detect the position of the at least one support and thus the first part by detecting/scanning the at least one support locator (29); and
scanning the component using the scanning head whilst using the detector to detect the position and orientation of the mounting portion and thus the second part by detecting the position of the at least one mounting portion locator.

11. A method according to claim 10 further comprising a calibration step comprising using the detector to detect the position of the at least one frame locator (30) and the at least one mounting portion locator to establish the relative positions of the support frame (26) and the robotic arm.

12. A method according to claim 10 or 11 further comprising a second calibration step comprising using the detector to detect the position and orientation of the first support by detecting the position of the at least one first support locator.

13. A method according to any one of claims 10 to 12 further comprising replacing the scanning head with one or more further processing tools and processing the component whilst using the detector to detect the position and orientation of the mounting portion and thus the second part by detecting the position of the at least one mounting portion locator.

14. A method according to claim 13 wherein the one or more further processing tool comprises an ultrasound probe (43) and the method comprises measuring wall thickness in the vicinity of an internal cavity whilst detecting the positions/orientations of the at least one mounting portion locator.

15. A method according to claim 13 or claim 14 wherein the one or more further processing tools comprises comprising a tool having an abrasive belt (44) and the method comprises abrading the component whilst detecting the positions/orientations of the at least one mounting portion locator.
